**Europäisches Patentamt**

**European Patent Office**

**Office européen des brevets**

(11) Veröffentlichungsnummer: **0 035 134**
**A2**

# (12) EUROPÄISCHE PATENTANMELDUNG

(21) Anmeldenummer: **81100870.5**

(22) Anmeldetag: **07.02.81**

(51) Int. Cl.³: **B 62 K 5/04**

(30) Priorität: **28.02.80 DE 3007605**

(43) Veröffentlichungstag der Anmeldung: **09.09.81**
**Patentblatt 81/36**

(84) Benannte Vertragsstaaten: **AT BE CH DE FR GB IT LI NL SE**

(71) Anmelder: **Maschinenfabrik Neumann GmbH & Co KG, Auf dem Anger 9, D-3300 Braunschweig-Bienrode (DE)**

(72) Erfinder: **Merkel, Nikolaus, Dipl.Designer, Friedrich-Wilhelm-Strasse 32, D-3300 Braunschweig (DE)**
Erfinder: **Simon, Helmut E. Dipl.Ing., Dipl.Designer, Göttingstrasse 28, D-3300 Braunschweig (DE)**
Erfinder: **Lippe, Reinhard, Ing.grad., Auf dem Anger 9, D-3300 Braunschweig-Bienrode (DE)**

(74) Vertreter: **Lins, Edgar, Dipl.-Phys. et al, Patentanwälte Gramm + Lins Theodor-Heuss-Strasse 2, D-3300 Braunschweig (DE)**

(54) **Mit Muskelkraft betriebenes Fahrzeug.**

(57) Bei einem mit Muskelkraft betriebenen Fahrzeug mit mindestens drei Rädern (1, 2), die über einen einen Fahrradantrieb (3, 4) tragenden Rahmen (8) miteinander verbunden sind, und mit einem Sitz (11) für mindestens eine Person sowie einem gegebenenfalls entfernbaren Wetterschutz (17, 18) wird ein das vordere und hintere Ende des tragenden Rahmens (8) verbindendes, mit dem tragenden Rahmen (8) fest verbindbares starres Rahmenteil (9) vorgesehen, das sich bogenförmig über den Sitz (11) erstreckt und den Wetterschutz (17, 18) trägt.

Dadurch läßt sich das Fahrzeug in leichter Bauweise herstellen und ist für den Antrieb mit Muskelkraft besonders geeignet.

# Patentanwälte GRAMM + LINS

0035134
Dipl.-Ing. Werner Gramm
Dipl.-Phys. Edgar Lins

D-3300 Braunschweig

Maschinenfabrik
Neumann GmbH & Co KG
Auf dem Anger 9

3300   Braunschweig-Bienrode

| Telefon: | (05 31) 8 00 79 |
|---|---|
| Telex: | 09 52 620 |

Anwaltsakte 232-1 EP-1
Datum    6.2.1931

"Mit Muskelkraft betriebenes Fahrzeug"

Die Erfindung betrifft ein mit Muskelkraft betriebenes Fahrzeug mit mindestens drei Rädern, die über einen
einen Fahrradantrieb tragenden Rahmen miteinander verbunden
sind, mit einem Sitz für mindestens eine Person und mit
einem ggfs. entfernbaren Wetterschutz.

Die zunehmende Verkehrs- und damit Umweltbelastung, insbesondere
der Innenstädte, sowie eine menschlichere Stadtplanung der
Innenstädte haben in einem zunehmendem Maße seit einiger Zeit
dazu geführt, daß über Fahrzeuge nachgedacht wird, die eine
geringere Lärm- und Schadstoffbelastung hervorrufen.

In diesem Zusammenhang ist die Verwendung von Elektrofahrzeugen,
aber auch von Fahrrädern erwogen worden.

Während Elektrofahrzeuge wegen des Erfordernisses der regelmäßigen und relativ kurzfristigen Aufladung umständlich zu
handhaben und darüberhinaus teuer sind, weisen muskelgetriebene Fahrzeuge, wie Fahrräder, derartige Nachteile nicht auf.
Der Nachteil dieser Fahrzeuge besteht jedoch darin, daß der
Benutzer dem Wetter vollständig ausgesetzt ist, so daß eine

- 2 -

Benutzung bei schlechtem Wetter allenfalls in einer besonderen Regenkleidung möglich ist.

Es hat bereits Versuche gegeben, Zweirad- oder Dreiradfahrzeuge mit einem Wetterschutz zu versehen. Diese Versuche bezogen sich immer auf motogetriebene Fahrzeuge. Das gemeinsame Merkmal der bekannten Vorschläge besteht darin, daß der Wetterschutz immer klappbar ausgestaltet war und bei schönem Wetter zusammengeklappt werden sollte.

Diese Arten des Wetterschutzes mußten eine aufwendige Mechanik aufweisen, waren schwer zu bedienen, boten bei ihrer Bedienung Verletzungsgefahren und waren relativ schwer, was bei einem muskelgetriebenen Fahrzeug ein gravierender Nachteil ist.

Die Idee, Zweirad- , Dreirad- oder mehrrädrige Fahrzeuge mit einem Wetterschutz zu versehen, ist daher seit vielen Jahren fallengelassen worden. In der Praxis hat sie sich auch bei Motorrädern o.ä. nicht durchgesetzt.

Der Erfindung liegt demgegenüber die Aufgabe zugrunde, ein Fahrzeug anzugeben, das sich insbesondere als Stadtfahrzeug mit einer geringen Umweltbelastung eignet und trotzdem keine hinderliche Spezialkleidung des Fahrzeugführers erfordert.

Diese Aufgabe wird erfindungsgemäß mit einem Fahrzeug der eingangs erwähnten Art gelöst, das ein das vordere und hintere Ende des tragenden Rahmen verbindendes, mit dem tragenden Rahmen fest verbindbares, starres Rahmenteil aufweist, das sich bogenförmig über den Sitz erstreckt und den Wetterschutz trägt.

- 3 -

Durch das erfindungsgemäße Fahrzeug sind die bekannten Bahnen
in entscheidender Weise verlassen worden. Einerseits weist
das Fahrzeug keinen zusammenklappbaren Wetterschutz mehr auf,
sondern die Konstruktion bleibt im wesentlichen unabhängig
davon unverändert, ob ein Wetterschutz benötigt wird oder nicht.
Weiterhin ist die bisher vorhandene Meinung überwunden worden,
ein Wetterschutz ließe sich bei einem muskelgetriebenen Fahrzeug wegen des höheren Gewichts und der damit verbundenen
Erschwerung des Antriebs nicht verwirklichen.

Der Erfindung liegt die Erkenntnis zugrunde, daß sich das
erfindungsgemäße Fahrzeug wegen des starren, bogenförmigen
Rahmenteils mit sehr geringem Gewicht herstellen läßt, weil
kein eine ausreichende Stabilität aufweisender und damit
schwerer Klappmechanismus verwendet werden muß. Für das Rahmenteil können beispielsweise Leichtbauprofile verwendet werden,
die ein minimales Gewicht bei einer ausreichenden Stabilität
gewährleisten. Unter dieser Voraussetzung läßt sich ein
Wetterschutz auch bei einem muskelbetriebenen Fahrzeug verwirklichen, so daß ein derartiges Fahrzeug als Stadtfahrzeug
benutzt werden kann, das keinerlei Umweltbelastungen hervorruft. Vorzugsweise wird das Rahmenteil durch einen Rohrrahmen
gebildet, der Befestigungsmittel für den Wetterschutz aufweist. Der Wetterschutz kann dabei vorzugsweise aus rollbaren
Planen bestehen. Der Rohrrahmen stellt keine den Antrieb des
Fahrzeugs merklich erschwerende Belastung dar. Er trägt zur
Stabilität des tragenden Rahmens bei, wenn der Rohrrahmen den
tragenden Rahmen zu einem geschlossenen Rahmen ergänzt. Dadurch kann das Unterteil des geschlossenen Rahmens, also der
tragende Rahmen, leichter ausgeführt sein  als in der herkömmlichen Ausführung. Durch den Rohrrahmen wird das Gesamtgewicht des Fahrzeuges daher praktisch nicht erhöht. In einer
bevorzugten Ausführungsform besteht der Rohrrahmen aus zwei

- 4 -

- 4 -

in Längsrichtung parallel zueinander verlaufenden, über Querstreben miteinander verbundenen Rohren, zwischen denen der
Wetterschutz anbringbar ist. Selbstverständlich können auch
die Seitenteile des geschlossenen Rahmens durch einen Wetterschutz abgedeckt werden.

Es kann zweckmäßig sein, daß auch das die Räder miteinander
verbindende Rahmenteil aus zwei parallelen Rohren gebildet ist.
In einer alternativen Ausführungsform weist das Fahrzeug ein
Vorderrad und zwei Hinterräder auf, wobei das die Räder miteinander verbindende Rahmenteil aus einem Rohrstück besteht, das
sich zu den Hinterrädern hin aufgabelt und einstückig mit der
die beiden Hinterräder tragenden Hinterachse verbunden ist.
Diese Ausführungsform zeichnet sich durch eine besonders leichte Bauweise aus.

Für das Rahmenteil kann vorzugsweise ein Profil verwendet werden, das im Querschnitt nach hinten stufenförmig verschmälert
ist, wobei in dem stufenförmigen Absatz die Befestigungsmittel
für den Wetterschutz angebracht sind. Die Befestigungsmittel
befinden sich beim Fahren mit dem Fahrzeug im Windschatten
des breiteren Profilteils. Darüberhinaus wird eine eventuelle
Verletzungsgefahr durch die Befestigungsteile vermindert.

Aus aerodynamischen Gründen kann das Rahmenteil vorne eine
gewölbte durchsichtige Kunststoffscheibe als Windschutzscheibe
tragen. Weiterhin kann vorne im unteren Teil des Fahrzeuges
hinter dem Vorderrad ein einstückiger, nach hinten gewölbter
Spritzschutz vorgesehen sein, der etwa die Breite des Rahmenteils aufweist.

Die Lenkvorrichtung des erfindungsgemäßen Fahrzeugs ist vorzugsweise im vorderen Bereich des Rahmens angebracht und nach Art eines Fahrradlenkers ausgebildet.

Die Erfindung soll im folgenden anhand von in der Zeichnung dargestellten Ausführungsbeispielen näher erläutert werden.

Es zeigen:

Figur 1    eine perspektivische Darstellung einer Ausführungsform eines erfindungsgemäßen Fahrzeuges

Figur 2    eine Seitenansicht des Fahrzeuges aus Figur 1

Figur 3    eine perspektivische Darstellung einer anderen Ausführungsform eines erfindungsgemäßen Fahrzeuges

Figur 4    eine seitliche Ansicht des Fahrzeuges aus Figur 3

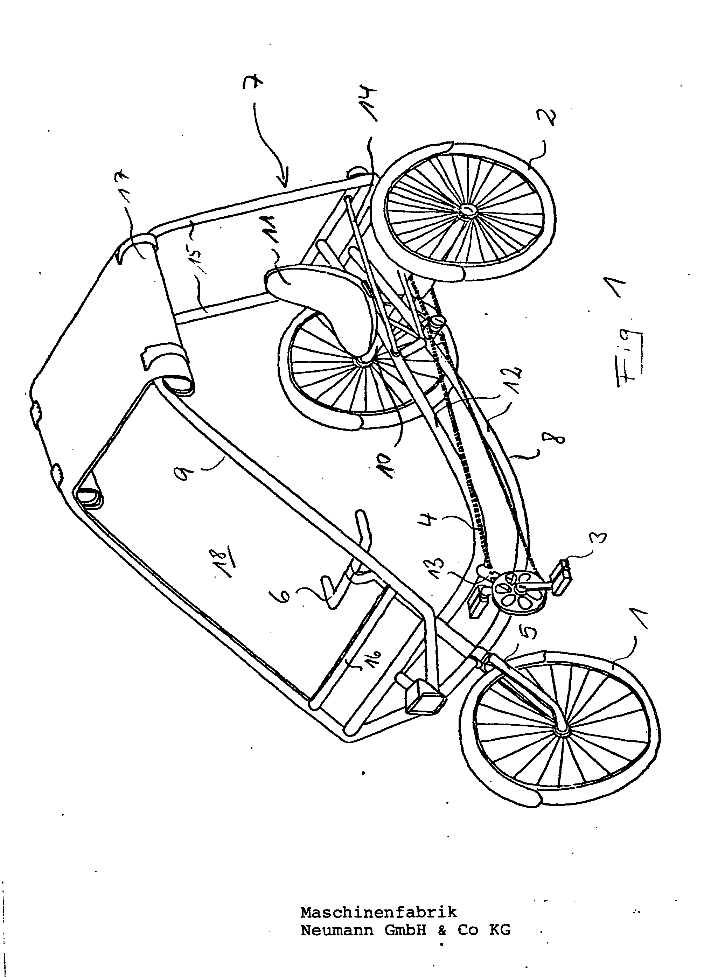

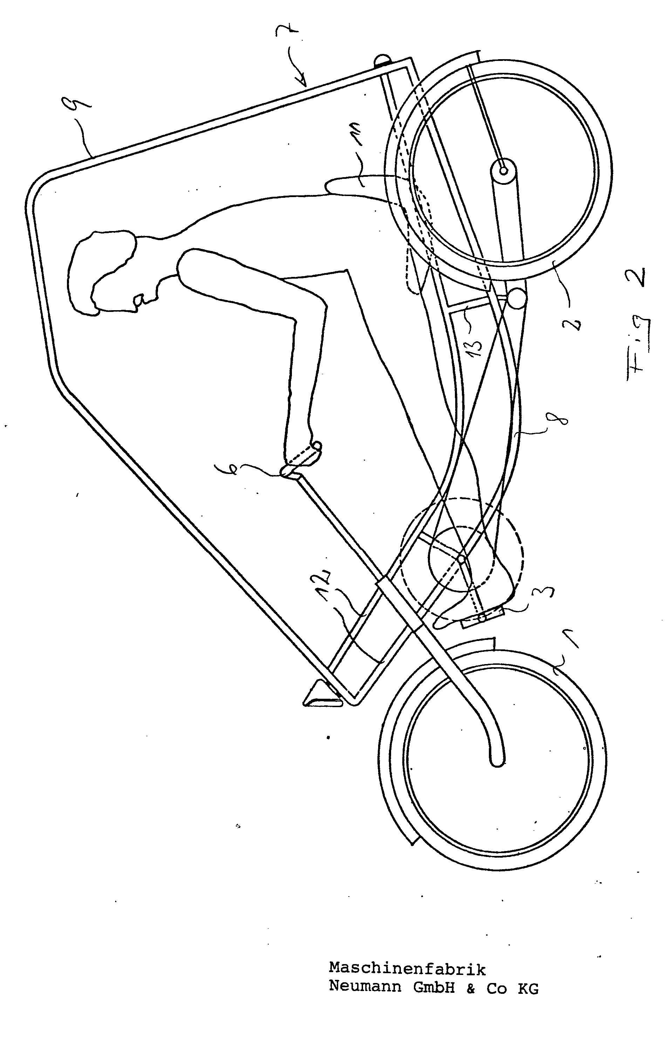

Das in den Figuren 1 und 2 dargestellte Fahrzeug weist ein Vorderrad 1 und zwei Hinterräder 2 auf. Letztere werden in bekannter Weise durch Pedalen 3, deren Bewegung durch eine Kette 4 auf die Hinterräder 2 übertragen wird, angetrieben. Das Vorderrad 1 ist in üblicher Weise über eine Radgabel 5 mit einem Lenker 6 lenkbar.

Das Fahrzeug weist einen geschlossenen Rohrrahmen 7 auf, der aus einem unteren, die Räder miteinander verbindenden tragenden Rahmen 8 und einem oberen Rahmenteil 9, das das vordere und das hintere Ende des tragenden Rahmens 8 miteinander verbindet und sich bogenförmig über einen nahe an der die beiden Hinterräder 2 miteinander verbindenden Hinterachse 10 angeordneten Sitz 11 erstreckt, besteht.

In dem dargestellten Ausführungsbeispiel besteht der untere Rahmen 8 im wesentlichen aus zwei übereinander angeordneten, im wesentlichen parallel zueinander verlaufenden Rohren 12, die durch Querstreben 13 miteinander verbunden sind. Der
Rahmen 8 ist fest mit der Hinterachse 10 verbunden. Am hinteren
Ende besitzt er eine Gabelung 14, die zur Verbindung des
Rahmens 8 mit dem Rahmenteil 9 dient.

Das Rahmenteil 9 weist eine Breite auf, die groß genug ist,
um den Fahrer des Fahrzeugs zu schützen. Das obere Rahmenteil
besteht daher aus zwei in der Breite nebeneinander und
parallel zueinander verlaufenden Rohren 15, die ebenfalls durch
Querstreben 16 stabilisiert sind.

Der komplette Rahmen kann vorzugsweise komplett verschweißt
sein, so daß der obere Rahmenteil 9 zur Erhöhung der Stabilität des tragenden Rahmens 8 beiträgt.

In einer anderen Ausführungsform kann der untere Rahmen 8
statisch unabhängig von dem oberen Rahmenteil 9 sein, so daß
dieses auch abnehmbar ausgestaltet sein kann. In jedem Fall
ist das obere Rahmenteil 9 doch starr ausgeführt. An dem oberen
Rahmenteil 9 ist in dem dargestellten Ausführungsbeispiel ein
Wetterschutz in Form einer rollbaren Plane 17 befestigt. Der
Zwischenraum zwischen den Rohren 15, der nach vorn zeigt,
kann durch eine fest eingesetzte, durchsichtige Kunststoffscheibe 18 ausgefüllt sein. Es ist jedoch auch möglich, auch
diesen Zwischenraum durch eine rollbare, durchsichtige Plane
auszufüllen, so daß bei schönem Wetter auch dieser Zwischenraum frei bleiben kann.

Wird eine feste Kunststoffscheibe 18 eingesetzt, kann diese
vorzugsweise unter aerodynamischen Gesichtspunkten nach vorn
gewölbt sein.

Das in Figur 1 und 2 dargestellte Ausführungsbeispiel stellt
eine flache Form eines derartigen Fahrzeuges dar, die eine gute aerodynamische Ausgestaltung ermöglicht. Der Fahrer sitzt in diesem Fahrzeug mit relativ weit nach vorn gestreckten Beinen, wie dies in Figur 2 angedeutet ist.

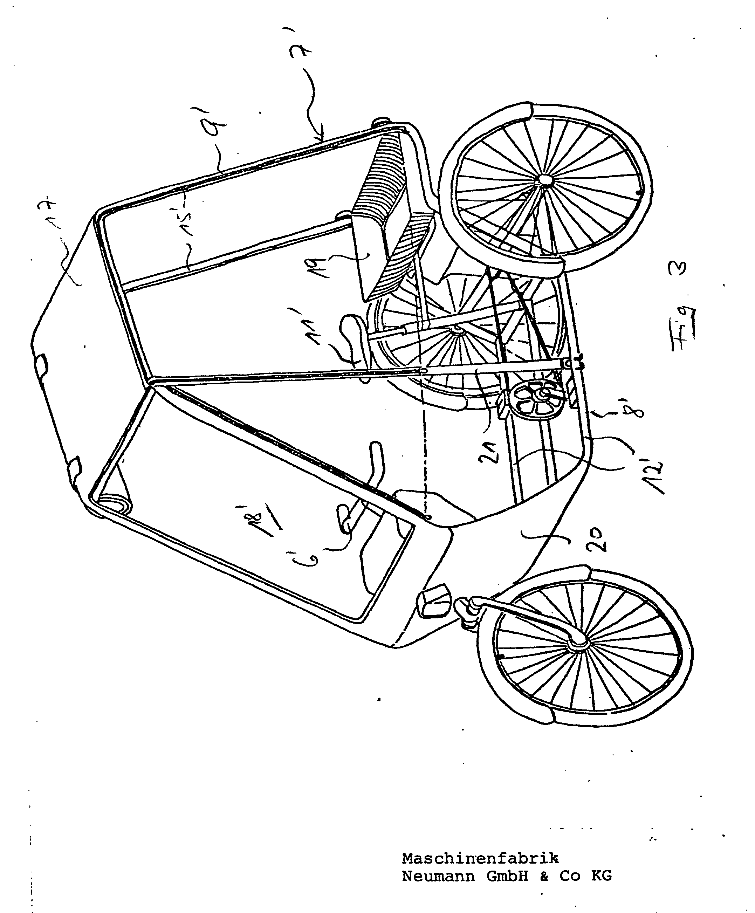

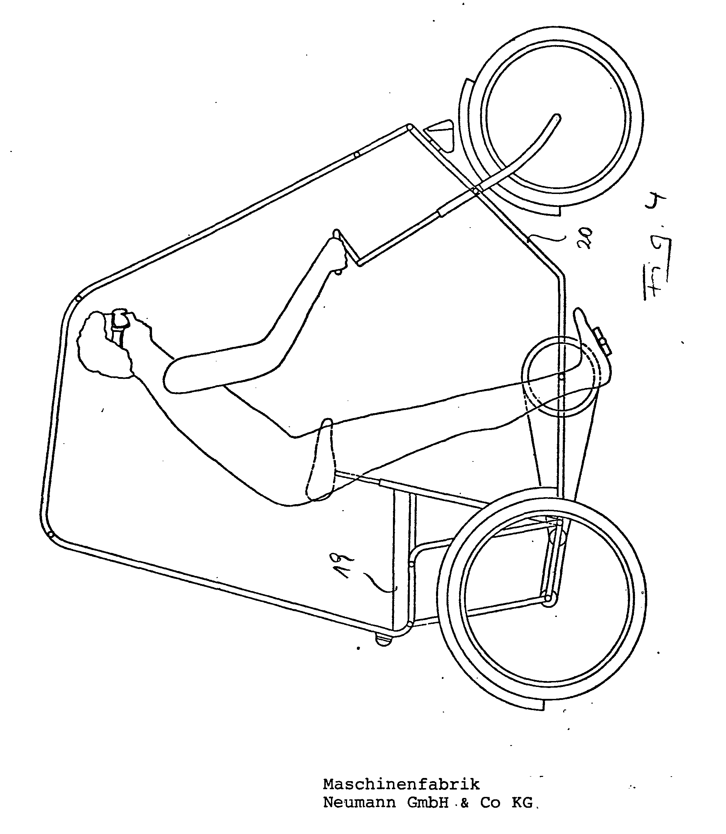

Die Figuren 3 und 4 zeigen ein anderes Ausführungsbeispiel. Dieses ist höher und kürzer gebaut als das in den Figuren 1 und 2 dargestellte Beispiel. Die Sitzposition des Fahrers ist ähnlich wie bei einem Fahrrad, d.h. die Beine werden im wesentlichen nach unten und weniger nach vorn gestreckt.

Der untere Rahmen 8' besteht in diesem Fall wie das obere Rahmenteil 9' aus zwei in der Breite nebeneinander angeordneten Rohren 12', 15'.

Hinter dem Sitz 11' ist noch eine Gepäckschale 19 angedeutet, die beispielsweise zur Aufnahme von eingekauften Gütern dient. Statt der Gepäckschale 19 kann hier auch ein Kindersitz vorgesehen werden.

Der untere Rahmen 8' weist an seinem vorderen Ende am Übergang zum oberen Rahmenteil 9' eine durchgehende, gewölbte Platte 20 auf, die hinter dem Vorderrad 1 angeordnet ist. Diese Platte dient sowohl als Spritz- als auch als Windschutz. Das Dach des Fahrzeuges ist wiederum durch eine Plane 17 gebildet, die nach beiden Seiten hin abrollbar ist.

Das Ende der abgerollten Plane ist in Figur 3 gestrichelt angedeutet. Die Festlegung der somit nur etwa über die halbe Höhe sich nach unten erstreckenden ausgerollte Plane 17 erfolgt durch elastische Bänder 21, die am Rahmen 7', beispielsweise durch einhaken, befestigt werden können.

Selbstverständlich sind viele Variationen des erfindungsgemäßen Fahrzeuges denkbar. So können ohne weiteres Zweisitzer
realisiert werden, bei denen die Sitze nebeneinander oder
hintereinander in Form eines Tandems angeordnet sein können.
Die konkrete Ausbildung des Rahmens 7, 7' kann dem Einzelfall
ohne weiteres angepaßt werden und ist nicht auf die dargestellten Ausführungsbeispiele beschränkt.

Patentanwälte GRAMM + LINS

Dipl.-Ing. Werner Gramm
Dipl.-Phys. Edgar Lins

D-3300 Braunschweig

Maschinenfabrik
Neumann GmbH & Co KG
Auf dem Anger 9

3300 Braunschweig-Bienrode

Telefon: (05 31) 8 00 79
Telex: 09 52 620

Anwaltsakte 232-1 EP-1
Datum 6.2.1981

Patentansprüche:

1. Mit Muskelkraft betriebenes Fahrzeug mit mindestens drei
   Rädern, die über einen · ·   ·-_ : einen Fahrradantrieb tragenden Rahmen miteinander verbunden sind, mit einem Sitz für
   mindestens eine Person und mit einem ggfs. entfernbaren.
   Wetterschutz, g e k e n n z e i c h n e t , durch ein das
   vordere und hintere Ende des tragenden Rahmens (8, 8')
   verbindendes, mit dem tragenden Rahmen (8, 8') fest verbindbares starres Rahmenteil (9, 9'), das sich bogenförmig über den Sitz (11, 11') erstreckt und den Wetterschutz (17) trägt.

2. Fahrzeug nach Anspruch 1, dadurch gekennzeichnet, daß
   das Rahmenteil (9, 9') ein Rohrrahmen ist.

3. Fahrzeug nach Anspruch 2, dadurch gekennzeichnet, daß das
   Rahmenteil (9, 9') in Längsrichtung aus zwei parallel zueinander verlaufenden, über Querstreben (16) miteinander
   verbundenen Rohren (15, 15') besteht und daß der Wetterschutz (17) zwischen den Rohren (15, 15') anbringbar ist.

- 2 -

4. Fahrzeug nach einem der Ansprüche 1 bis 3, dadurch gekennzeichnet, daß an dem Rahmenteil (9, 9') ein aus mehreren rollbaren Planen (17) bestehender Wetterschutz befestigt ist.

5. Fahrzeug nach einem der Ansprüche 1 bis 4, dadurch gekennzeichnet, daß auch die Seitenteile des Gesamtrahmens (7, 7') durch einen Wetterschutz (17) abdeckbar sind.

6. Fahrzeug nach einem der Ansprüche 1 bis 5, dadurch gekennzeichnet, daß das die Räder (1, 2) miteinander verbindende Rahmenteil (8, 8') aus zwei parallelen Rohren (12,12') gebildet ist.

7. Fahrzeug nach einem der Ansprüche 1 bis 6, dadurch gekennzeichnet, daß das Fahrzeug ein Vorderrad (1) und zwei Hinterräder (2) aufweist und daß das die Räder (1, 2) miteinander verbindende Rahmenteil (8) aus einem Rohrstück (12) besteht, das die Breite des Rahmenteils (8) festlegt und sich zum hinteren Ende aufgabelt und einstückig mit der die beiden Hinterräder (2) tragenden Hinterachse (10) verbunden ist.

8. Fahrzeug nach einem der Ansprüche 1 bis 7, gekennzeichnet durch eine nach Art eines Fahrradlenkers ausgebildete, im Bereich des vorderen Endes des Rahmens (7) befestigte Lenkvorrichtung (6).

9. Fahrzeug nach einem der Ansprüche 1 bis 8, dadurch gekennzeichnet, daß das Rahmenteil (9, 9') an der Vorderseite des Fahrzeugs eine durchsichtige, gewölbte Kunststoffscheibe (18, 18') trägt.

0035134

10. Fahrzeug nach einem der Ansprüche 1 bis 9, dadurch gekennzeichnet, daß der Rahmen (8, 8') hinter dem Vorderrad (1) einen einstückigen, nach hinten gewölbten Spritzschutz (20) in der ungefähren Breite des Rahmenteils (9, 9') trägt.

Patentanwälte

Gramm + Lins

Li/af

0035134 ³⁹¹⁷ DE Pt

Fig. 1

Maschinenfabrik
Neumann GmbH & Co KG

3917 DE Pt
0035134

Fig 2

3917 DE Pt
0035134

Fig 3

Fig. 4

Maschinenfabrik
Neumann GmbH & Co KG.